# EUROPEAN PATENT APPLICATION

(11) **EP 4 807 647 A1**
(43) Date of publication of application: **16.09.2026**
(21) Application number: 25178464.1
(22) Date of filing: 23.05.2025
(51) Int. Cl.: G06Q 20/02, G06Q 20/06, G06Q 20/38, G06Q 20/40

(54) **A MONITORING AND AUDITING TOOL OF BLOCKCHAIN BASED FINANCIAL PAYMENT AND CLEARING**

(30) Priority: 10.03.2025 HK 22025104525
(71) Applicant: REMI INVESTMENT LIMITED, Central (HK)
(72) Inventor: ZHU, Dong, Central (HK)
(74) Representative: Chung, Hoi Kan

(57) **Abstract**

A monitoring and auditing tool of blockchain based financial payment and clearing, comprising a verification center for managing, verifying and querying transactions, a certificate authorization module; the verification center is provided and serves as a centralized center to monitor and audit the blockchain based financial payment and clearing for bridging the regulatory gap in blockchain decentralized system; the Verification Center serves as an international compliance data center, sharing risk intelligence with regulatory institutes worldwide.

## Description

### FIELD OF THE INVENTION

The present invention involves a monitoring and auditing tool for blockchain based financial payment and clearing.

### BACKGROUND OF THE INVENTION

The Society for Worldwide Interbank Financial Telecommunication (SWIFT) has been the backbone of global cross-border transactions since 1973. It operates as a messaging network, enabling financial institutions to securely transmit payment orders. However, SWIFT does not handle fund transfers directly; instead, it relies on a network of correspondent banks to settle transactions. This process introduces multiple intermediaries, leading to delays (often 1-5 days), higher costs (due to fees from each intermediary and forex conversions), and opacity in transaction tracking. While SWIFT's standardized messaging (MT/MX formats) ensures interoperability, its centralized architecture and legacy infrastructure struggle with inefficiencies in today's demand for real-time, low-cost transactions.

Blockchain technology, a decentralized ledger system, offers transformative potential for clearing and settlement by addressing SWIFT's limitations, and have following characteristics:
- Decentralization:
   Transactions do not rely on traditional financial institutions (e.g., banks) but are validated by a distributed network of nodes, eliminating centralized oversight.
- Transparency vs. Anonymity Paradox:
   Transaction records are publicly accessible (e.g., Bitcoin blockchain), but addresses are not directly linked to real-world identities, creating "pseudonymity."
- Immutability:
   Data on the blockchain cannot be altered once recorded. However, this also makes reversing illicit transactions (e.g., money laundering) technically impossible.

But applying blockchain technology in the field of virtual currency will cause following challenges:
1.Anonymity Abuse and Money Laundering Risks
2. Cross-Border Transactions and Regulatory Arbitrage
   - Global Instant Settlement:
      Virtual currencies can be transferred across jurisdictions instantly (e.g., via cross-chain bridges), evading localized regulations.
   - Regulatory Fragmentation:
      Inconsistent definitions of virtual currencies (e.g., property in the U.S. vs. financial instruments in the EU) hinder international coordination.
3. DeFi Compliance Dilemmas
   - Lack of Accountability:
      Decentralized protocols lack centralized entities to enforce AML obligations, such as the FATF's "Travel Rule."
   - Flash Loan Exploits:
      Attacks exploiting smart contract vulnerabilities (e.g., the $182 million Beanstalk hack in 2022) highlight risks in automated systems.

So, the core technical features of virtual currencies: decentralization, cryptographic privacy, and smart contracts, are both drivers of innovation and sources of regulatory complexity. But it is necessary to take effective regulation requirements to address the "Decentralized" regulatory gap, balance privacy and transparency and mitigate smart contract risks.

### SUMMARY OF THE INVENTION

In view of the aforesaid drawbacks of the prior art, the present invention provides a monitoring and auditing tool of blockchain based financial payment and clearing as following solutions.

A monitoring and auditing tool of blockchain based financial payment and clearing, wherein comprising;
a verification center for managing, verifying and querying transactions handled by blockchain based clearing and settlement service system for financial payment and clearing;
a certificate authorization module for releasing and verifying trust certificates of parties who deploy or use the blockchain based clearing and settlement service system;
at least a transaction information of a transaction purpose is embedded into a specific stable coin for transferring the fiat currencies value and risk control information;
transaction information of KYC/KYB and proof of the transaction purpose are collected and kept by the initiate party and the receive party which are certified by the certificate authorization module;
the verification center monitors all the transactions dealing by the blockchain based clearing and settlement service system; when a STR raised, the verification center requests the initiate party and receive party to provide the KYC/KYB and the proof of the transaction purpose, verifies the risk of the transaction, and keep the record of the risk.

Further, an agency of the trust certificate issuing is a financial institution, a web3 wallet provider and third party trusted by the certificate authorization module.

Further, a risk center is provided and communicated with the verification center; the risk center takes over the STR handling procedure and feedback the risk record to the verification center.

Further, the initiate party and receive party can raise a query to the verification center to get the risk record to evaluate the risk of subsequent transactions.

Further, each party with the trust certificate is assigned appropriate permissions for accessing the information of transaction and risk record.

Further, the parties with the trust certificate are divided into
group 1: financial institutions and web3 wallet providers, who are the users of the blockchain based clearing and settlement service system, and have the permission to review the record of transaction that is initiated;
group 2: regulatory agencies, who have permission to review the transaction and risk record of the transaction.

Further, the parties with the trust certificate are also include:
group 3: observers, who monitor the operation of the blockchain based clearing and settlement service system and the verification center, have permission to review all the record of transaction and the risk record and propose regulatory recommendations.

Further, the transaction information also includes the fields of whether the initiate party and the receive party collect the KYC/KYB.
Further, the STR includes the fields of: report institution, client information of the transaction, transaction information, description of suspicious transaction report and crime report.

The present invention has the following advantages: the verification center is provided and serves as a centralized center to monitor and audit the blockchain based financial payment and clearing for bridging the regulatory gap in blockchain decentralized system. The transaction information deployed to the blockchain ledge is similar to normal virtual currency, such as transaction hash, initiate party address, receive party address, transaction amount, digital signature, etc. And the transaction purpose is additional transaction information being added into the blockchain ledge for meeting the regulatory requirement. So, the private information, such as KYC/KYB and proof of the transaction purpose, will not be disclosed in the blockchain ledge to maintain the anonymity character of blockchain. And each party who involves in the blockchain based clearing and settlement service system for financial payment and clearing, must be trust verified with trust certificate to handling the transaction, deploying the transaction information such as initiate party address, receive party address and digital signature for the verification center can trace every transaction on the blockchain. The trust parties must keep KYC/KYB and proof of the transaction purpose inside the institute for regulatory monitoring and auditing. Once a STR(suspicious transaction report) raised or under the request of regulatory agencies, the initiate party address and receive party must transmit the KYC/KYB and proof of the transaction purpose to the verification center to verify the risk of the transaction and keep the record of the risk. The Verification Center serves as an international compliance data center, sharing risk intelligence (e.g., suspicious transaction patterns) with regulatory institutes worldwide.

### BRIEF DESCRIPTION OF THE DRAWINGS

Below are explanations of the invention combining with drawings.

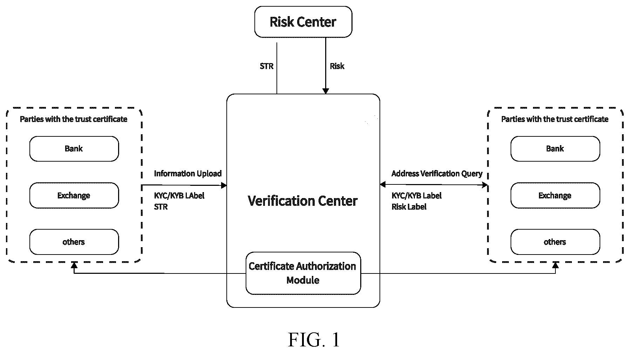

FIG.1 is the system architecture diagram of the present invention.

### DESCRIPTION OF THE EMBODIMENTS

Referring to Fig. 1, a monitoring and auditing tool of blockchain based financial payment and clearing, comprising;
a verification center for managing, verifying and querying transactions handled by blockchain based clearing and settlement service system for financial payment and clearing;
a certificate authorization module for releasing and verifying trust certificates of parties who deploy or use the blockchain based clearing and settlement service system;
at least a transaction information of a transaction purpose is embedded into a specific stable coin for transferring the fiat currencies value and risk control information;
transaction information of KYC/KYB and proof of the transaction purpose are collected and kept by the initiate party and the receive party which are certified by the certificate authorization module;
the verification center monitors all the transactions dealing by the blockchain based clearing and settlement service system; when a STR raised, the verification center requests the initiate party and receive party to provide the KYC/KYB and the proof of the transaction purpose, verifies the risk of the transaction, and keep the record of the risk.

The verification center is provided and serves as a centralized center to monitor and audit the blockchain based financial payment and clearing for bridging the regulatory gap in blockchain decentralized system. The transaction information deployed to the blockchain ledge is similar to normal virtual currency, such as transaction hash, initiate party address, receive party address, transaction amount, digital signature, etc. And the transaction purpose is additional transaction information being added into the blockchain ledge for meeting the regulatory requirement. So, the private information, such as KYC/KYB and proof of the transaction purpose, will not be disclosed in the blockchain ledge to maintain the anonymity character of blockchain. And each party who involves in the blockchain based clearing and settlement service system for financial payment and clearing, must be trust verified with trust certificate to handling the transaction, deploying the transaction information such as initiate party address, receive party address and digital signature for the verification center can trace every transaction on the blockchain. The trust parties must keep KYC/KYB and proof of the transaction purpose inside the institute for regulatory monitoring and auditing. Once a STR(suspicious transaction report) raised or under the request of regulatory agencies, the initiate party address and receive party must transmit the KYC/KYB and proof of the transaction purpose to the verification center to verify the risk of the transaction and keep the record of the risk. The Verification Center serves as an international compliance data center, sharing risk intelligence (e.g., suspicious transaction patterns) with regulatory institutes worldwide.

For monitoring and auditing every truncation by the blockchain based clearing and settlement service system, the transaction can only be initiated and received by trust parties for risk control. To verify the trust parties, the certificate authorization module will manage all the certificates used by the trust parties. It can issue certificates to trust parties or may manage the certificates issued by trust parties. Such trust parties must be credible institutions, such as Financial Institution (Banks, Securities companies, Insurance companies, Investment companies, Trust companies, etc.), web3 wallet providers (Cryptocurrency Exchanges), Financial regulatory agencies, etc.

A risk center is provided. It serves as risk control monitoring and auditing all the transactions in the blockchain. It communicates with the verification center to take over the STR handling procedure and feedback the risk record to the verification center for controlling the risk transaction.

According to the anti-money laundering laws and regulations of some counties, the exchange and transfer of digital assets are subject to anti-money laundering laws. The following provisions are made:
- KYC requirements for both parties in on-chain transactions
- Requirements for on-chain transactions on the fields that need to be recorded for a certain transfer
- Suspicious transaction reporting requirements for on-chain transactions

Therefore, the fields and information that should be collected are as follows:
**KYC Form**

| SN | Filed | Report to verification center | Compulsive? |
|---|---|---|---|
| 1 | First Name if collected | YES OR NO | YES |
| 2 | Middle Name if collected | YES OR NO | YES |
| 3 | Last Name if collected | YES OR NO | YES |
| 4 | Date of birth if collected | YES OR NO | YES |
| 5 | Gender if collected | YES OR NO | YES |
| 6 | Nationality if collected | YES OR NO | YES |
| 7 | ID type | ID, driving license, voter card, passport, others | YES |
| 8 | ID number if collected | YES OR NO | YES |
| 9 | ID Document Expiry Date | YES OR NO | YES |
| 10 | Address if collected | YES OR NO | YES |
| 11 | Contact number if collected | YES OR NO | YES |
| 12 | Contact e-mail if collected | YES OR NO | YES |
| 13 | Face liveness if passed | YES OR NO | YES |
| 14 | official database verification | YES OR NO | YES |
| 15 | Date of verification | DATE or not applicable | YES |
| 16 | POA if collected | YES OR NO | YES |

**KYB Forms**

| SN | Filed | Detail | Report to verification center | Compulsive? |
|---|---|---|---|---|
| 1 | Legal Name of corporation if collected | | YES OR NO | YES |
| 2 | Certificate of incorporation number if collected | | YES OR NO | YES |
| 3 | Business category if collected | • Non-finiancial Corporate | Type or not applicable | YES |
| | | • Bank | | |
| | | • Crypto Exchange | | |
| | | • Other financial institution | | |
| 4 | Contact number if collected | | YES OR NO | YES |
| 5 | Contact e-mail if collected | | YES OR NO | YES |
| 6 | Establishment Date and Registration Expiry Date if collected | | YES OR NO | YES |
| 7 | Registered office address if collected | | YES OR NO | YES |
| 8 | Business License/Business Registration Certificate if collected | | YES OR NO | YES |
| 9 | Lease Contract if collected | | YES OR NO | NO |
| 10 | Tax Registration Certificate if collected | | YES OR NO | NO |
| 11 | Latest Annual Return (if applicable) if collected | | YES OR NO | NO |

| Directors Information | | | |
|---|---|---|---|
| SN | Filed | Report to verification center | Compulsive? |
| 1 | Directors List if collected | YES OR NO | YES |
| 2 | Directors Identity Document if collected | YES OR NO | NO |
| 3 | Directors Proof of Address if collected | YES OR NO | NO |

| Ultimate Beneficial Owner Information | | | |
|---|---|---|---|
| SN | Filed | Report to verification center | Compulsive? |
| 1 | List of UBOs (shareholders/benef iciaries with a shareholding ratio greater than 25%) if collected | YES OR NO | YES |
| 2 | UBO Identity Document if collected | YES OR NO | No |
| 3 | UBO Proof of Address if collected | YES OR NO | NO |
| 4 | UBO Control Statement if collected | YES OR NO | NO |

| Shareholders & Ownership Structure | | | |
|---|---|---|---|
| SN | Filed | Report to verification center | Compulsive? |
| 1 | Shareholders List if collected | YES OR NO | YES |
| 2 | Shareholding Structure Diagram if collected | YES OR NO | NO |
| 3 | Share Certificates if collected | YES OR NO | NO |

| Bank Account Information | | | | |
|---|---|---|---|---|
| SN | Filed | Compliance Assessment | Report to verification center | Compulsive? |
| 1 | Company Bank Account Details if collected | Bank Name, Account Number, SWIFT/BIC Code. | YES OR NO | NO |
| 2 | Latest 3-6 Months Bank Statements if collected | to prove the transaction status and fund flow of the company's account. | YES OR NO | NO |

| Business Verification Documents | | | | |
|---|---|---|---|---|
| SN | Field | Compliance Assessment | Report to verification center | Compulsive? |
| 1 | Business Contracts / Invoices if collected | Recent business contracts or invoices to prove that the company has real business operations. | YES OR NO | NO |
| 2 | List of Major Suppliers / Customers if collected | Proof of the authenticity of the company's business operations (if applicable). | YES OR NO | NO |
| 3 | Company Website / Online Business Proof if collected | Company website URL, or other online business proof. | YES OR NO | NO |

| Other Supporting Documents | | | | |
|---|---|---|---|---|
| SN | Field | Compliance Assessment | Report to verification center | Compulsive? |
| 1 | Licenses / Permits (if applicable) if collected | Certain industries require relevant business licenses. | YES OR NO | YES |
| 2 | AML & Compliance Policy if collected | Certain industries require relevant business licenses. | YES OR NO | NO |
| 3 | Latest Financial Statements if collected | Most recent balance sheet, income statement (if applicable). | YES OR NO | NO |

| Fields for initiating a transfer (AML Travel Rule) | | | | |
|---|---|---|---|---|
| SN | Field | Detail | Report to verification center | Compulsive? |
| Transaction Initiator Information | Initiator name | | name or not applicable | NO |
| | Initiator address | | Residential address or not applicable | NO |
| | Initiator ID number | | ID number or not applicable | NO |
| | Initiator Date of birth | | Date or not applicable | NO |
| Transaction Receiver Information | Receiver name | | name or not applicable | NO |
| Transaction Details | Transaction type | • Individual to Individual | | YES |
| | | • Fund Position Transfer among banks and financial institutions | | |
| | | • FX settlement | | |
| | | • Payment in commercial purpose | | |
| | | • Crypto Exchange investment | | |
| | | • Others | | |
| | Evidence | | | NO |

STR FORM

| Category | Field | Compulsive? |
|---|---|---|
| Basic information of the report | Institution | YES |
| | Institution Code | NO |
| | Date of Report | YES |
| Customer basic information | Name | YES |
| | Type | YES |
| | Certification Type | YES |
| | Certification Number | YES |
| | Date of Birth | YES |
| | Nationality | YES |
| | Contact Number | YES |
| | Email | YES |
| | Address | YES |
| | Registration Time | YES |
| Related transaction details | Transaction Time | YES |
| | Transaction Type | YES |
| | Amount | YES |
| | Currency Type | YES |
| | Account No / Wallet Address | YES |
| | Counterparty's Account No / Wallet Address | YES |
| | Counterparty's Name | YES |
| | Counterparty's Institution | YES |
| Description of suspicious activity | Category of Suspicion | YES |
| | Crime Type | YES |
| | Risk Level | YES |
| | Control Measures | YES |

## Claims

1. A monitoring and auditing tool of blockchain based financial payment and clearing, wherein comprising;
a verification center for managing, verifying and querying transactions handled by blockchain based clearing and settlement service system for financial payment and clearing;
a certificate authorization module for issuing and verifying trust certificates of parties who deploy or use the blockchain based clearing and settlement service system;
at least a transaction information of a transaction purpose is embedded into a specific stable coin for transferring the fiat currencies value and risk control information;
transaction information of KYC/KYB and proof of the transaction purpose are collected and kept by the initiate party and the receive party which are certified by the certificate authorization module;
the verification center monitors all the transactions dealing by the blockchain based clearing and settlement service system; when a STR raised, the verification center requests the initiate party and receive party to provide the KYC/KYB and the proof of the transaction purpose, verifies the risk of the transaction, and keep the record of the risk.

2. The monitoring and auditing tool of blockchain based financial payment and clearing, wherein an agency of the trust certificate issuing is a financial institution, a web3 wallet provider and third party trusted by the certificate authorization module.

3. The monitoring and auditing tool of blockchain based financial payment and clearing of claim 1, wherein a risk center is provided and communicated with the verification center; the risk center takes over the STR handling procedure and feedback the risk record to the verification center.

4. The monitoring and auditing tool of blockchain based financial payment and clearing of claim 1, wherein the initiate party and receive party can raise a query to the verification center to get the risk record to evaluate the risk of subsequent transactions.

5. The monitoring and auditing tool of blockchain based financial payment and clearing of claim 1, wherein each party with the trust certificate is assigned appropriate permissions for accessing the information of transaction and risk record.

6. The monitoring and auditing tool of blockchain based financial payment and clearing of claim 1, wherein the parties with the trust certificate are divided into group 1: financial institutions and web3 wallet providers, who are the users of the blockchain based clearing and settlement service system, and have the permission to review the record of transaction that is initiated;
group 2: regulatory agencies, who have permission to review the transaction and risk record of the transaction.

7. The monitoring and auditing tool of blockchain based financial payment and clearing of claim 6, wherein the parties with the trust certificate are also include:
group 3: observers, who monitor the operation of the blockchain based clearing and settlement service system and the verification center, have permission to review all the record of transaction and the risk record and propose regulatory recommendations.

8. The monitoring and auditing tool of blockchain based financial payment and clearing of claim 6, wherein the transaction information also includes the fields of whether the initiate party and the receive party collect the KYC/KYB.

9. The monitoring and auditing tool of blockchain based financial payment and clearing of claim 6, wherein the STR includes the fields of: report institution, client information of the transaction, transaction information, description of suspicious transaction report and crime report.
